(19) Europäisches Patentamt / European Patent Office / Office européen des brevets

(11) **EP 3 528 991 B1**

(12) **EUROPEAN PATENT SPECIFICATION**

(45) Date of publication and mention
of the grant of the patent:
**09.02.2022 Bulletin 2022/06**

(51) International Patent Classification (IPC):
**B23K 11/11** (2006.01)    **B23K 11/18** (2006.01)
**B23K 11/20** (2006.01)    **B23K 103/10** (2006.01)
**B23K 103/18** (2006.01)    **B23K 103/16** (2006.01)
**B23K 101/18** (2006.01)

(21) Application number: **17794533.4**

(22) Date of filing: **20.10.2017**

(52) Cooperative Patent Classification (CPC):
**B23K 11/115; B23K 11/185; B23K 11/20;**
B23K 2101/18; B23K 2103/10; B23K 2103/166;
B23K 2103/18

(86) International application number:
**PCT/US2017/057613**

(87) International publication number:
**WO 2018/075904 (26.04.2018 Gazette 2018/17)**

(54) **ENHANCED RESISTANCE SPOT WELDING USING CLADDED ALUMINUM ALLOYS**

VERBESSERTES WIDERSTANDSPUNKTSCHWEISSEN VON MEHRSCHICHTIGEN
ALUMINIUMLEGIERUNGEN

SOUDAGE PAR POINTS PAR RÉSISTANCE AMÉLIORÉ UTILISANT DES ALLIAGES D'ALUMINIUM
PLAQUÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2016 US 201662411196 P**

(43) Date of publication of application:
**28.08.2019 Bulletin 2019/35**

(73) Proprietor: **Novelis Inc.
Atlanta, GA 30326 (US)**

(72) Inventors:
• **CHAI, Xiao
  Kennesaw
  Georgia 30144 (US)**
• **MALPICA, Julio
  Canton
  Georgia 30114 (US)**
• **AHMED, Hany
  Atlanta
  Georgia 30326 (US)**
• **BEZENCON, Cyrille
  3971 Chermignon (CH)**
• **BASSI, Corrado
  3970 Salgesch (CH)**
• **SIMON, Jörg
  3953 Varone (CH)**

(74) Representative: **Weickmann & Weickmann
PartmbB
Postfach 860 820
81635 München (DE)**

(56) References cited:
WO-A2-2013/096669     JP-A- H0 810 964
JP-A- H04 160 130     US-A1- 2008 102 308
US-A1- 2015 053 655

# Description

## FIELD OF THE INVENTION

This application relates to resistance spot welding, and more particularly to resistance spot welding of multi-alloy metal sheets.

## BACKGROUND

Metal manufacturing can involve welding metal sheets or metal alloy sheets together to form various parts or components of a final product. Various techniques or processes, including, for example, resistance spot welding ("RSW"), can be used to weld the metal sheets. RSW can involve positioning metal sheets between multiple electrodes and using the electrodes to apply a clamping force and an electric current to the metal sheets. Heat produced from a resistance of the metal sheets to the electric current, along with the clamping force from the electrodes, can be used to join the metal sheets at intermetallic layers, which are commonly known as weld nuggets.

WO 2013/096669 A2 describes an apparatus and methods for joining dissimilar materials and in particular resistance spot welding of at least one first sheet comprising an aluminum alloy and at least one second sheet comprising a non-aluminum material, e.g. Ti, Mg, Steel or Cu.

US 2008/0102308 A1 discloses a method for joining an iron member and an aluminum member. US 2015/0053655 A1 describes multi-step direct welding of an aluminum-based workpiece to a steel workpiece.

JP H04 160130 A discloses the preamble of claim 1 and 5, respectively and relates to a resistance spot welding method of aluminum alloy clad plates comprising a core material and a shell material.

JP H08 10964 A refers to a resistance spot welding method for aluminum structural sheets, wherein the initial sheets comprise an aluminum core alloy plate which is sandwiched by two pure aluminum clad layers.

## SUMMARY

The present invention relates to a method of resistance spot welding comprising:

positioning a first metal sheet (102) and a second metal sheet (104) between two electrodes (110), wherein at least a portion of the first metal sheet overlaps a portion of the second metal sheet between the two electrodes (110), wherein the first metal sheet (102) and the second metal sheet (104) comprise an aluminum alloy,
clamping the two electrodes (110) together such that the electrodes (110) contact opposing surfaces of the first metal sheet (102) and the second metal sheet (104); and

applying a current to the first metal sheet (102) and the second metal sheet (104) through the two electrodes (110) to form a weld having a minimum weld size to join the first metal sheet with the second metal sheet, and wherein the current is within a weld envelope, wherein the weld envelope includes a minimum current sufficient for forming the minimum weld size and a maximum current at which metal expulsion and/or surface cracking occurs,
wherein the first metal sheet (102) is a fusion alloy comprising a core of a first aluminum alloy and at least one outer layer of a second aluminum alloy that is different from the first aluminum alloy, and
wherein the second metal sheet (104) comprises a monolithic aluminum sheet.

In some examples, a method of resistance spot welding comprises positioning a first metal sheet and a second metal sheet between two electrodes. In some aspects, at least a portion of the first metal sheet overlaps a portion of the second metal sheet between the two electrodes. In various examples, at least one of the first metal sheet and the second metal sheet is a fusion alloy comprising a core and at least one outer layer. The core comprises a first aluminum alloy and the at least one outer layer comprises a second aluminum alloy that is different from the first aluminum alloy. In other aspects, the method also comprises positioning the two electrodes on opposing surfaces of the first metal sheet and the second metal sheet.

In some examples, the method comprises applying at least a minimum current to the first metal sheet and the second metal sheet through the two electrodes to form a weld having a minimum weld size to join the first metal sheet with the second metal sheet. In various examples, the minimum current is a current sufficient to melt the first aluminum alloy and the second aluminum alloy

In other examples, the method comprises applying a current to the first metal sheet and the second metal sheet through the two electrodes to form a weld having a minimum weld size to join the first metal sheet with the second metal sheet. In these examples, the current is within a weld envelope, and the weld envelope includes a minimum current sufficient for forming the minimum weld size and a maximum current at which metal expulsion and / or surface cracking occurs.

According to the present invention, disclosed is a welded structure comprising a first metal sheet and a second metal sheet and a resistance spot weld formed by the method of any one of claims 1 -4, wherein both the first metal sheet and the second metal sheet comprise an aluminum alloy, wherein the first metal sheet is a fusion alloy comprising a core of a first aluminum alloy and at least one outer layer of a second aluminum alloy that is different from the first aluminum alloy and, wherein the second metal sheet comprises a monolithic aluminum sheet.

Various implementations described in the present disclosure can include additional systems, methods, features, and advantages, which can not necessarily be expressly disclosed herein but will be apparent to one of ordinary skill in the art upon examination of the following detailed description and accompanying drawings. It is intended that all such systems, methods, features, and advantages be included within the present disclosure as defined by the appended claims.

## BRIEF DESCRIPTION OF THE DRAWINGS

The features and components of the following figures are illustrated to emphasize the general principles of the present disclosure. Corresponding features and components throughout the figures can be designated by matching reference characters for the sake of consistency and clarity.

FIG. 1A is a diagram illustrating an example of an RSW system.

FIG. 1B is a diagram illustration steps of an RSW process.

FIG. 1C are scanning electron microscope (SEM) pictures taken from a metal cut of a sample of a fusion alloy weld at the different steps of the RSW process as illustrated in FIG. 1B.

FIG. 2A is a chart illustrating a weld envelope of a monolithic weld.

FIG. 2B is a chart illustrating a weld envelope of a fusion alloy weld.

FIG. 3A is a chart illustrating a weld growth curve of a monolithic weld.

FIG. 3B is a chart illustrating a weld growth curve of a fusion alloy weld.

FIG. 3C is a chart illustrating a weld growth curve of a monolithic/fusion weld according to an example of the present disclosure.

FIG. 4A is an SEM picture taken from a metal cut of a sample of a fusion alloy weld.

FIG. 4B is an SEM picture taken from a metal cut of a sample of a monolithic weld.

FIG. 4C is an enlarged SEM picture taken from box A in FIG. 4A.

FIG. 5A is a chart illustrating a tensile test of a monolithic weld.

FIG. 5B is a chart illustrating a tensile test of a fusion alloy weld.

FIG. 6 is a chart illustrating weld growth of a monolithic weld and weld growth of a fusion alloy weld.

FIG. 7 is a chart mapping micro-hardness of monolithic welds and fusion alloy welds.

FIG. 8 is a chart illustrating the weld strength of monolithic welds and fusion alloy welds.

FIG. 9 includes SEM pictures illustrating weld growth of a monolithic weld and weld growth of a fusion alloy weld.

## DETAILED DESCRIPTION

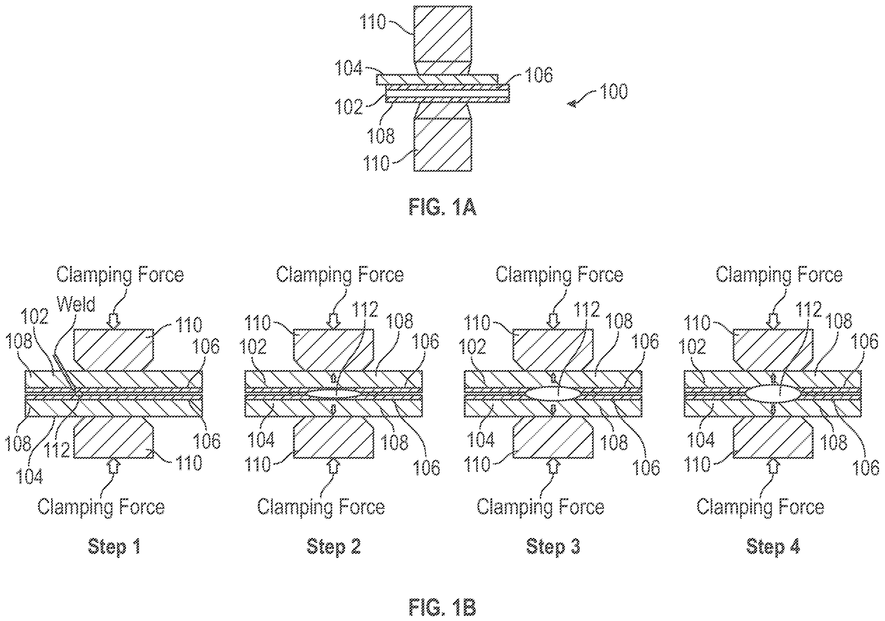

FIG. 1A illustrates an exemplary system 100 for enhanced resistance spot welding (RSW) of a first metal sheet 102 to a second metal sheet 104. According to the invention, the first metal sheet 102 is an aluminum cladded alloy sheet comprising a core 106 and at least one outer layer 108 having a composition that is different from the composition of the core (i.e., a "fusion alloy"). The fusion alloy may be formed through Fusion™ casting, roll cladding, or any other suitable process. In various examples, the core 106 can be a 1xxx series aluminum alloy, a 2xxx series aluminum alloy, a 3xxx series aluminum alloy, a 4xxx series aluminum alloy, a 5xxx series aluminum alloy, a 6xxx series aluminum alloy, a 7xxx series aluminum alloy, an 8xxx series aluminum alloy, or brazing family alloys with high zinc levels. In a few non-limiting examples, the core 106 can be a 6014 aluminum alloy, a 6016 aluminum alloy, a 6111 aluminum alloy, a 6451 aluminum alloy, or various other types of aluminum alloys.

The one or more outer layers 108 is an aluminum alloy having a composition that is different from the aluminum alloy of the core 106. In some examples, the outer layer 108 is selected from the group comprising a 1xxx series aluminum alloy, a 2xxx series aluminum alloy, a 3xxx series aluminum alloy, a 4xxx series aluminum alloy, a 5xxx series aluminum alloy, a 6xxx series aluminum alloy, a 7xxx series aluminum alloy, an 8xxx series aluminum alloy, or brazing family alloys with high zinc levels. Brazing family alloys mean that the filler materials could be used for brazing of aluminum alloys, such as zinc-based brazing materials, which contain about 80% of zinc and balance aluminum. Various other brazing alloys may be used. In one non-limiting example, the at least one outer layer 108 is a 4045 aluminum alloy. In another non-limiting example, the at least one outer layer 108 is a 1050 aluminum alloy. In some examples, the aluminum alloy of the core 106 has a melting point that is greater than a melting point of the aluminum alloy of the at least one outer layer 108. In some examples, the aluminum alloy of the core 106 has a melting point that is less than the melting point of the aluminum alloy of the one or more outer layers 108. In various other examples, the aluminum alloy of the core 106 has a melting point that is about equal to the melting point of the aluminum alloy of the one or more outer layers 108. As described in detail below, in some examples, a fusion alloy having an outer layer 108 with a lower melting temperature than the melting temperature of the core 106 may decrease the amount of welding current needed to form a minimum weld size.

In certain cases, the one or more outer layers 108 constitutes approximately 0-50% of the thickness of the first metal sheet 102, such as about 5-45% of the thickness or about 10-40% of the thickness or about 15-35% of the thickness. In some examples, the one or more outer layers 108 constitutes about 20% of the thickness of the first metal sheet 102.

In one non-limiting example of the first metal sheet 102, the aluminum alloy of the core 106 is a 6014 aluminum alloy and the aluminum alloy of the one or more outer layers is a 4045 aluminum alloy. In another non-limiting example of the first metal sheet 102, the aluminum alloy of the core 106 is a 6111 aluminum alloy and the aluminum alloy of the one or more outer layers 108 is a 4045 aluminum alloy. In a further non-limiting example of the first metal sheet 102, the aluminum alloy of the core 106 is a 6451 aluminum alloy and the aluminum alloy of the one or more outer layers 108 is a 4045 aluminum alloy.

The second metal sheet 104 is a monolithic aluminum alloy sheet to be welded to the first metal sheet 102. According to the invention, the first metal sheet 102 is the fusion alloy. In a non-limiting example, the first metal sheet 102 is the fusion alloy and the second metal sheet 104 is an aluminum alloy.

To weld the first metal sheet 102 to the second metal sheet 104, at least a portion of the first metal sheet 102 and at least a portion of the second metal sheet 104 are positioned between at least two electrodes 110 such that the first metal sheet 102 and the second metal sheet 104 at least partially overlap. Any suitable number of electrodes 110 can be used. The electrodes 110 are clamped together such that the electrodes 110 contact opposing surfaces of the first metal sheet 102 and the second metal sheet 104, as illustrated in FIG. 1A. An electric current is applied via the electrodes 110 to form a weld.

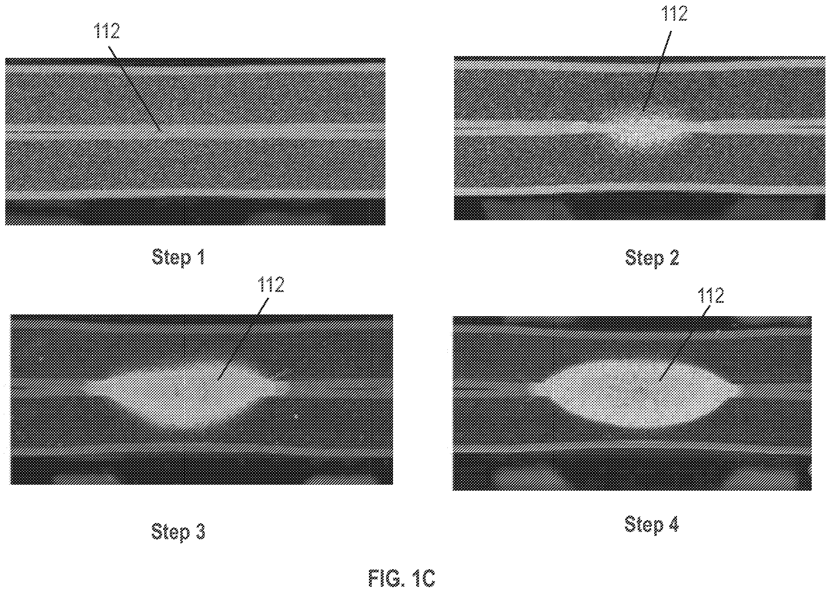

FIG. 1B illustrates an example of steps of an RSW process where both the first metal sheet 102 and the second metal sheet 104 are fusion alloys (not according to the invention). In Step 1, the electrodes 110 are clamped together, and the electric current is applied. Heat is generated at the interface between the two outer layers 108, causing the outer layers 108 to deform first and form a tiny weld nugget 112. In Step 2, the weld nugget 112 grows and elongates within the outer layers 108 due to the lower melting temperature of the outer layers 108 relative to the cores 106. In Step 3, enough heat is generated at the interface of the outer layers 108 and the cores 106 such that the cores 106 start to melt. In Step 4, the nugget 112 expands in both the cores 106 and the outer layers 108. FIG. 1C are SEM pictures of examples of the growth of a weld 112 at Steps 1-4 during an RSW process where both the first metal sheet and the second metal sheet are fusion alloys (not according to the invention).

In various examples, the electric current applied is at least a minimum current to form a weld having a minimum weld size (MWS) to join the first metal sheet 102 with the second metal sheet 104. MWS is defined as $4\sqrt{t}$, where t is the thickness of the governing metal thickness. In a stack of two aluminum alloy sheets, the governing metal thickness is generally the thinnest sheet. In a stack of three aluminum alloy sheets, the governing metal thickness is generally the thickness of the middle sheet. In various examples, the thickness may be any thickness that is suitable with RSW technology. As one non-limiting example, the thickness may be from about greater than 0 mm to about 4 mm. In some examples, the electric current is applied for about 50 milliseconds to about 2 seconds. As one non-limiting example, the electric current can be applied for about 50 milliseconds to about 150 milliseconds for a t of 1.0 mm. In another non-limiting example, the current can be applied for about 400 milliseconds to about 2 seconds.

In various cases, the minimum current is a current sufficient to melt the aluminum alloy forming the core 106 of the fusion alloy and the aluminum alloy forming the one or more outer layers 108 of the fusion alloy. In some examples, the electric current is a current within a weld envelope having a minimum current sufficient for forming the minimum weld size (MWS) and a maximum current sufficient for forming the minimum weld size. In these examples, the maximum current is where metal expulsion and/or surface cracks may occur. In various examples, the size of the weld envelope of the metal sheets 102 and 104, where one of metal sheets 102 and 104 is a fusion alloy, is improved to obtain large weld nuggets without the incidence of metal expulsion, surface cracking, or other defects in the weld.

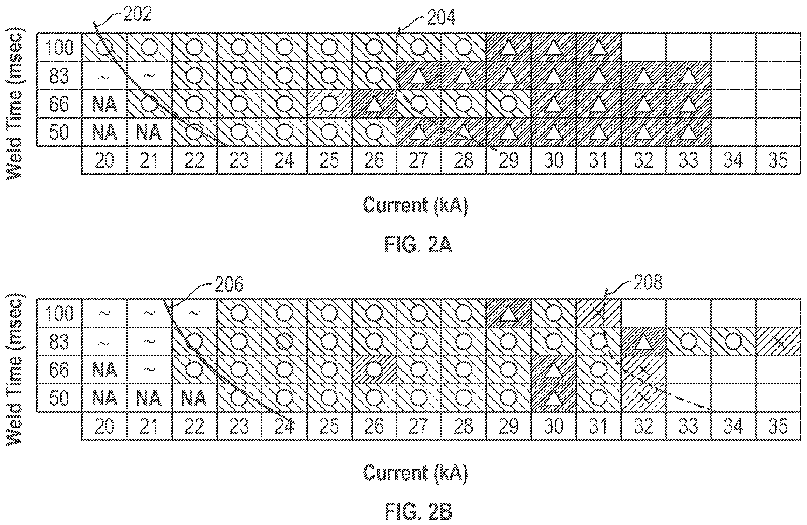

FIGS. 2A-B are charts illustrating the improved weld envelope of an exemplary fusion alloy (not according to the invention). In these examples, a weld envelope of a monolithic sheet (consisting of two welded 6014 aluminum alloy sheets) (FIG. 2A) can be compared to a weld envelope of a fusion alloy sheet (consisting of two welded fusion alloy sheets each having an 6014 aluminum alloy core and a 4045 aluminum alloy outer layer) (FIG. 2B). Both the monolithic sheet of FIG. 2A and the fusion alloy sheet of FIG. 2B had a thickness of 1.0 mm, and an electrode force of about 550-650 Lbf was applied to both sheets. As indicated, the charts include weld time (in milliseconds), current applied (in kA), and an indication of whether a weld was formed that was below the MWS (indicated by "~"), whether a weld having at least a MWS was achieved (indicated by "∘"), whether an expulsion occurred (indicated by "X"), whether a surface crack occurred (indicated by "Δ").

The weld envelope was formed by applying each level of current for each time period five times to obtain five welds, and an average of the weld sizes was used as the representative weld size. If one out of the five welds had an expulsion or surface crack, the current and time combination was recorded as an expulsion or surface crack, respectively. The weld envelope generally refers to the range of current and weld time combinations over which welds having the MWS are obtained. In FIG. 2A, the curve 202 represents the start of the weld envelope for the monolithic sheet, or those combinations of currents and times where welds with MWS are obtained, and the curve 204 represents the end of the weld envelope for the monolithic sheet, or those combinations of currents and times after which defects such as surface cracks and expulsions occur. Similarly, in FIG. 2B, the curve 206 represents the start of the weld envelope for the fusion alloy sheet, or those combinations of currents and times where welds with MWS are obtained, and the curve 208 represents the end of the weld envelope for the fusion alloy sheet, or those combinations of currents and times after which defects such as surface cracks and expulsions occur.

As illustrated, the weld envelope of the fusion alloy sheet in FIG. 2B is increased relative to the weld envelope of the monolithic sheet in FIG. 2A. In this aspect, a greater number of currents and weld times can be utilized with the fusion alloy sheet as compared to the monolithic sheet to achieve welds without expulsions, surface cracks, or other defects. In some cases, the weld envelope for the fusion alloy sheet of FIG. 2B increased by about 3 kA when compared with the weld envelope for the monolithic sheet of FIG. 2A.

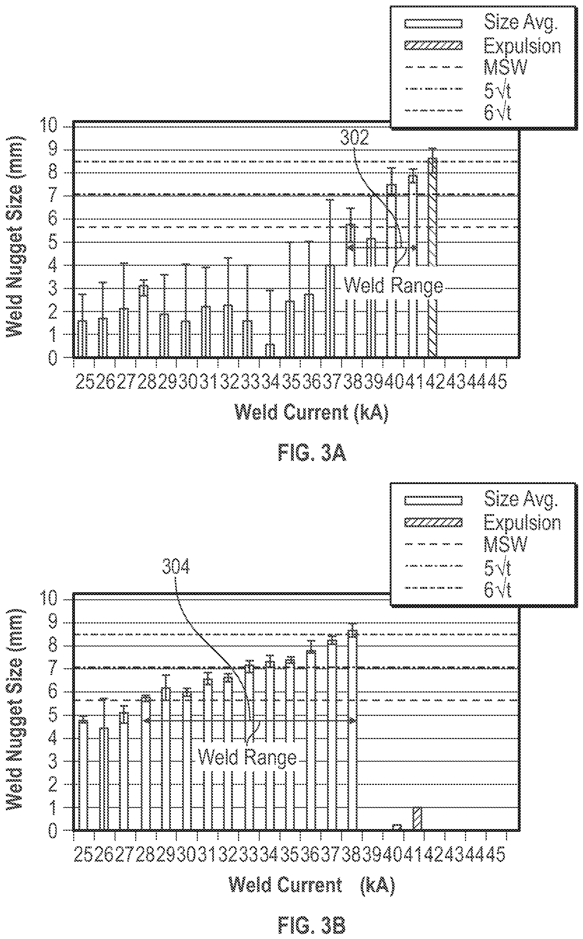

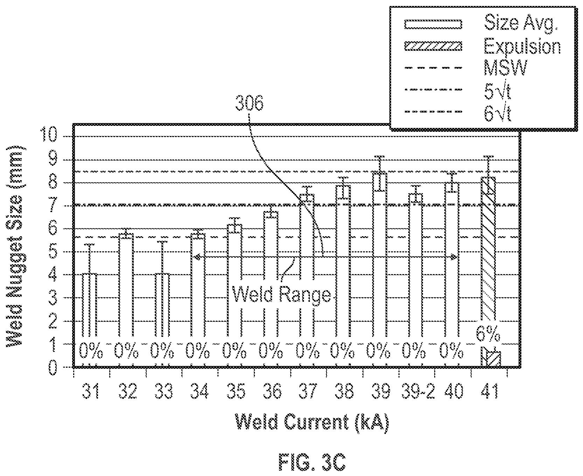

FIGS. 3A-C illustrate a non-limiting example of a weld growth curve for a monolithic sheet (FIG. 3A) (not according to the invention) compared to a weld growth curve for a fusion sheet ((FIG. 3B) (not according to the invention) and a weld growth curve for a monolithic/fusion sheet (FIG. 3C) (according to the invention). In each of FIGS. 3A-C, the weld growth curve and weld envelope (or weld range) are depicted for various weld sizes $4\sqrt{t}$ (the MWS), $5\sqrt{t}$ and $6\sqrt{t}$, where t is the thickness of the governing metal thickness, as described above. In these non-limiting examples, the monolithic sheet consists of two welded 6111 aluminum alloy sheets (FIG. 3A), the fusion alloy sheet consists of two welded sheets each having a 6111 aluminum core with a 4045 aluminum alloy outer layer (FIG. 3B), and the monolithic/fusion sheet consists of one monolithic 6111 aluminum alloy sheet welded to a fusion alloy sheet having a 6111 aluminum alloy core and a 4045 aluminum outer layer (FIG. 3C). The sheets are all 2.0 mm thick. The yellow bars in these figures indicate the occurrence of surface cracks.

Referring to FIG. 3A, in this example, the monolithic sheet required a current of at least 38 kA to create a weld having the MWS. The weld envelope (or weld range) 302 of this monolithic sheet was from about 38-41 kA to about 38-40 kA, or a weld range from about 2 kA to about 3 kA. Referring to FIG. 3B, in this example, the fusion sheet required a welding current of at least 30 kA to create a weld having the MWS. The weld envelope 304 of this fusion sheet was about from about 28-38 kA to about 30-38 kA, or a weld range of about 8-10 kA. Referring to FIG. 3C, in this example, the monolithic/fusion sheet required a welding current of about 34 kA to about 35 kA to create a weld having the MWS. The weld envelope 306 was about 34-41 kA to about 35-41 kA, or a weld range of about 6-7 kA.

Therefore, as illustrated, the fusion sheet (FIG. 3B) had a larger weld envelope 304 and obtained larger weld sizes at and above the MWS at lower welding currents as compared to the monolithic sheet (FIG. 3A) and the monolithic/fusion sheet (FIG. 3C). The monolithic/fusion sheet (FIG. 3C) had a larger weld envelop 306 and obtained larger weld sizes at and above the MWS at lower welding currents as compared to the monolithic sheet (FIG. 3A). The increased welding range or weld envelope contributes towards better welding robustness because the RSW of the fusion alloys have more margin compared to monolithic sheets. As one example, more welding currents may be utilized to create a suitable weld. In addition, the decreased minimum weld current needed of the fusion sheet may provide energy and cost savings to the user.

The welds formed through RSW of the metal sheets 102 and 104, where at least one of metal sheets 102 and 104 is a fusion alloy sheet, can also obtain the MWS while having reduced penetration within the metal sheets. In some aspects, the reduced penetration of the weld contributes towards an enhanced tip life of the electrodes 110. In some cases, the lower melting temperature of the outer layer 108 of the fusion alloy sheet may change the temperature distribution and heat dissipation in the welds, which may cause the reduced penetration. In some cases, the temperature at the electrode-outer layer interface of the fusion sheet during RSW may be reduced, which may further increase the tip life of the electrode. In some cases, the one or more outer layers 108 of the fusion alloy sheet includes silicone, which reduces diffusion between the one or more outer layers 108 and the electrode 110 and thus increases tip life of the electrode because aluminum bonds more easily with copper than silicone. In some examples, the tip life of the electrodes used to form the welds in the fusion alloy sheet was unexpectedly improved relative to the tip life of the electrodes used to form the welds in the monolithic sheet as the electrodes used with the fusion had less metal pick up and erosion (and thus less deterioration) as compared to the electrodes used with the monolithic.

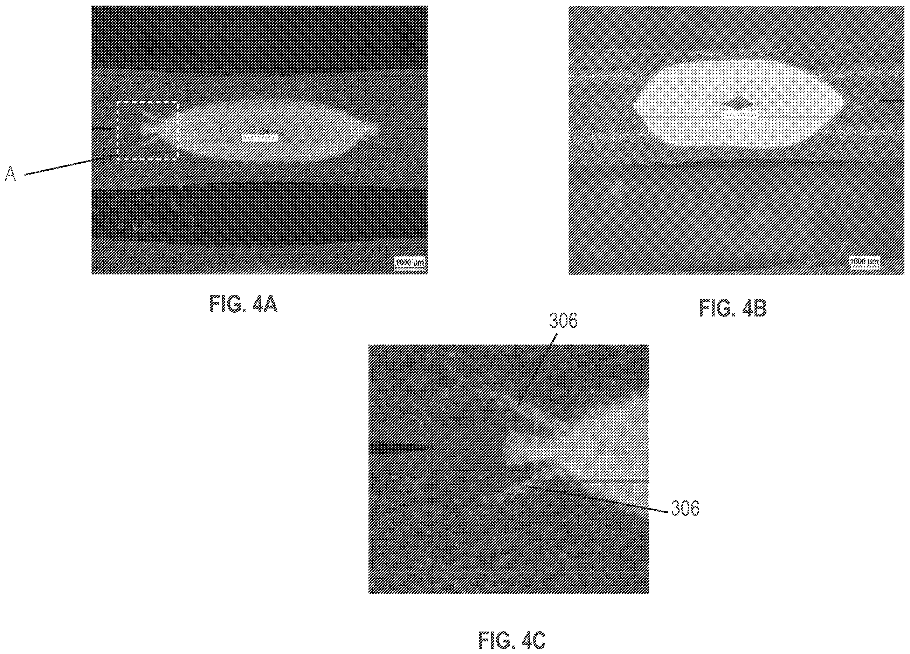

FIGS. 4A-B (not according to the invention) are SEM pictures of examples of weld nuggets and illustrate the penetration of the welds in a fusion alloy sheet as compared to a monolithic sheet. In these figures, a weld nugget in a 6014 aluminum alloy monolithic sheet (FIG. 4B) can be compared to a weld nugget in a fusion alloy having a 6014 aluminum alloy core and a 4045 aluminum alloy outer layer (FIG. 4A). As illustrated, the weld of the fusion alloy of FIG. 4A is more pancake-shaped, resulting in the penetration of the weld in the fusion alloy in FIG. 4A being less than the penetration of the weld in the monolithic alloy sheet in FIG. 4B. It is believed that the diameter of the weld is more influential on weld strength than the weld penetration. FIG. 4B also illustrates how no porosity is visible on the weld cross sections of the fusion alloy of FIG. 4B. FIG. 4C is a detailed view of the encircled area A of the weld of FIG. 4A. As illustrated in FIG. 4C, in some examples, the weld formed with the fusion alloy may cure or fill cracks 402 or other defects that appear in the metal sheets. In some cases, the one or more outer layers 108 of the fusion layer has a lower melting point and thus generates a pool of molten aluminum that penetrates the crack to heal or remove the crack 402. In some cases, the resulting mixture between the core 106 and the outer layer 108 will have a different composition (compared to the weld of a monolithic) that will aid in reducing the susceptibility of solidification cracking. For example and without limitation, in some examples, a higher silicon content may aid in reducing cracking. In other examples, various other compositions resulting from the weld of the fusion alloy may reduce cracking. As such, welding fusion alloys allows for larger weld sizes without the occurrence of surface cracks or expulsions as compared to welding a monolithic sheet.

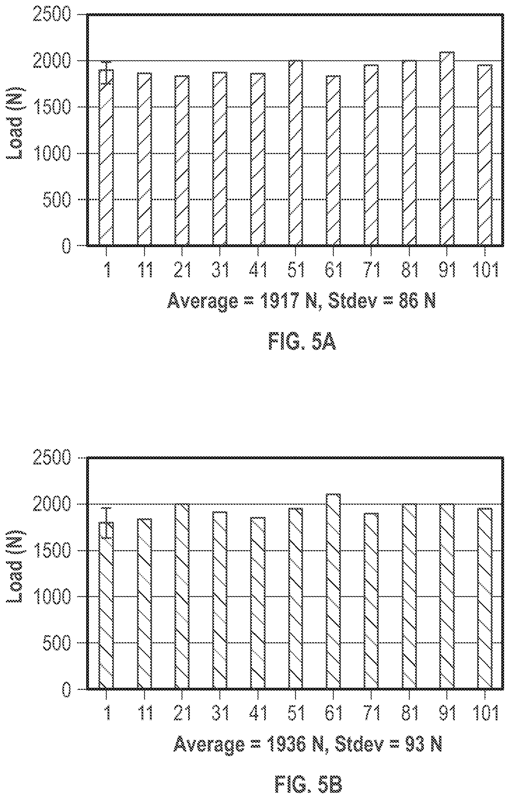

FIGS. 5A-B (not according to the invention) are charts illustrating results from a tensile test of weld tensile load for both the 6014 aluminum alloy monolithic sheet (FIG. 5A) and the fusion alloy having the 6014 aluminum alloy core and the 4045 aluminum alloy outer layer (FIG. 5B). One hundred welds were made in both metal sheets, starting with new electrodes. The welds formed in both the monolithic sheet and the fusion alloy sheet had little variation in tensile load. For example, in the monolithic sheet, the average tensile load was 1917 N with a standard deviation of 86 N. In the fusion alloy sheet, the average tensile load was 1936 N with a standard deviation of 93 N. Thus, the fusion alloy sheet welds have a similar or better strength than the monolithic sheet welds. Therefore, RSW of fusion alloy sheets produces welds having a weld strength that is similar to or better than monolithic welds while having a greater weld envelope and reduced minimum weld current as compared to monolithic welds.

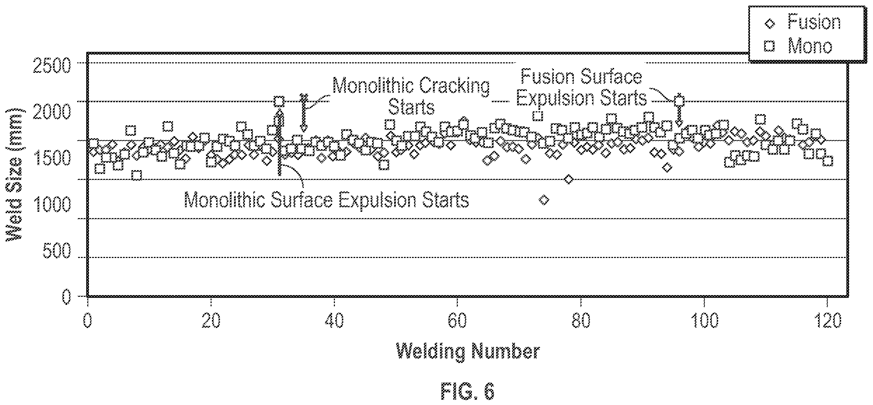

FIG. 6 (not according to the invention) is another chart illustrating weld growth of welds in monolithic sheets ("□") compared to weld growth of welds in fusion alloy sheets ("◇"). In these non-limiting examples, the monolithic sheet consists of two welded 6111 aluminum alloy sheets, and the fusion alloy sheet consists of two welded sheets each having a 6111 aluminum core with a 4045 aluminum alloy outer layer. As illustrated in FIG. 6, surface cracking started in the monolithic sheet after about 30 welds, while surface expulsion started in the fusion sheet after about 90 welds. In certain examples, the deterioration of the electrodes with the fusion sheet was less (e.g., less metal pick up and erosion) than the deterioration of the electrodes with the monolithic sheet.

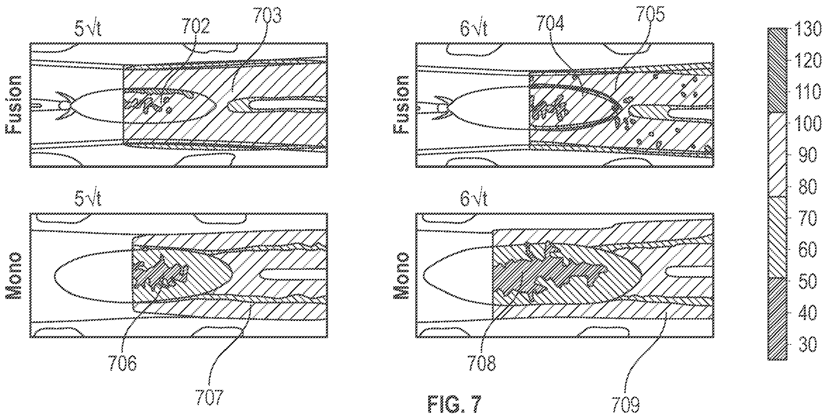

FIG. 7 (not according to the invention) is a chart mapping an example of the micro-hardness of a fusion weld nugget 702 having a weld size of $5\sqrt{t}$ , a fusion weld nugget 704 having a weld size of $6\sqrt{t}$ , a monolithic weld nugget 706 having a weld size of $5\sqrt{t}$ , and a monolithic weld nugget 708 having a weld size of $6\sqrt{t}$ . As illustrated, the fusion weld nuggets 702 and 704 have a similar hardness as the core metal 703 and 705, respectively, while the monolithic weld nuggets 706 and 708 are softer than the base metal 707 and 709, respectively. In some cases, the monolithic weld nuggets 706 and 708 are about 25% softer than the base metal.

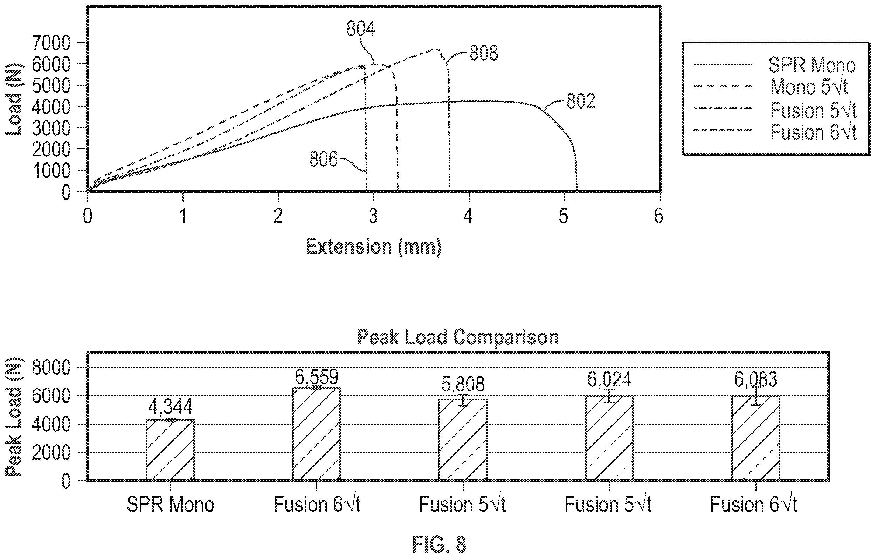

FIG. 8 (not according to the invention) is a chart illustrating the weld strength curve 802 of a monolithic self-piercing riveted (SPR) joint (a joint formed from the SPR of two 6111 aluminum alloy sheets), a weld strength curve 804 of a monolithic weld nugget 804 (a weld nugget formed from the RSW of two welded 6111 aluminum alloy sheets), a weld strength curve 806 of a fusion weld nugget (a weld nugget formed from the weld of two fusion aluminum alloy sheets, each having a 6111 aluminum alloy core and a 4045 aluminum alloy outer layer) having a weld size of $5\sqrt{t}$ , and a weld strength curve 808 of a fusion weld nugget (a weld nugget formed from the weld of two fusion aluminum alloy sheets, each having a 6111 aluminum alloy core and a 4045 aluminum alloy outer layer) having a weld size of $6\sqrt{t}$ . As illustrated in this figure, the fusion weld nuggets have a higher peak strength than SPR joints. In addition, the peak load of the fusion welds had less variance than that of the monolithic welds.

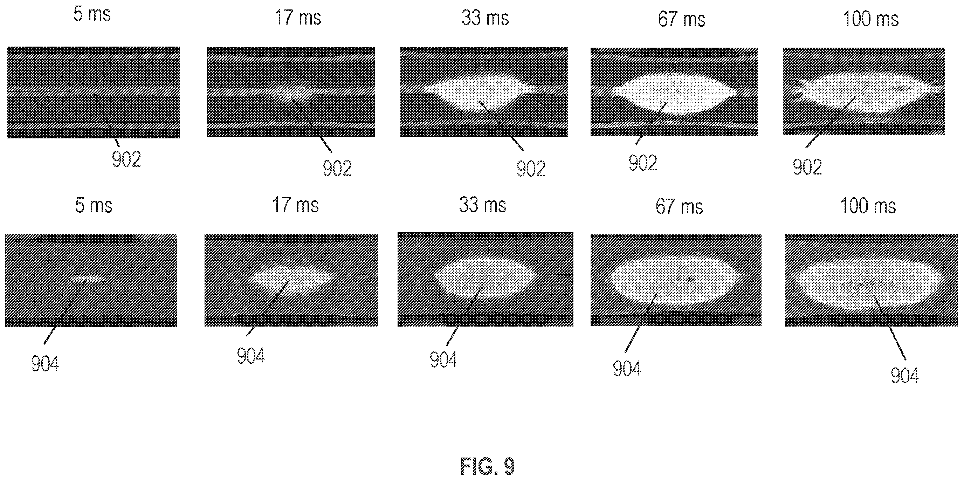

FIG. 9 (not according to the invention) includes SEM pictures illustrating a non-limiting example of the growth of a fusion weld nugget 902 compared to the growth of a monolithic weld nugget 904. In this example, the monolithic weld nugget 904 was formed from the RSW of two welded 6111 aluminum alloy sheets, and the fusion weld nugget 902 was formed from the weld of two fusion aluminum alloy sheets, each having a 6111 aluminum alloy core and a 4045 aluminum alloy outer layer. The welding time for both the fusion weld nugget 902 and the monolithic weld nugget was 100 ms. As illustrated in the figure, the fusion weld nugget 902 has a more controlled growth over time compared to the growth of the monolithic weld nugget 904. For example and without limitation, the monolithic weld nugget 904 comes close to a bottom surface of one of the sheets after 100 ms while the fusion weld nugget 902 remains about centrally located between the fusion sheets.

**Claims**

1. A method of resistance spot welding comprising:

   positioning a first metal sheet (102) and a second metal sheet (104) between two electrodes (110), wherein at least a portion of the first metal sheet overlaps a portion of the second metal sheet between the two electrodes (110), wherein the first metal sheet (102) and the second metal sheet (104) comprise an aluminum alloy, clamping the two electrodes (110) together such that the electrodes (110) contact opposing surfaces of the first metal sheet (102) and the second metal sheet (104); and

applying a current to the first metal sheet (102) and the second metal sheet (104) through the two electrodes (110) to form a weld having a minimum weld size to join the first metal sheet with the second metal sheet, and wherein the current is within a weld envelope, wherein the weld envelope includes a minimum current sufficient for forming the minimum weld size and a maximum current at which metal expulsion and/or surface cracking occurs, **characterized in that** the first metal sheet (102) is a fusion alloy comprising a core of a first aluminum alloy and at least one outer layer of a second aluminum alloy that is different from the first aluminum alloy, and wherein the second metal sheet (104) comprises a monolithic aluminum sheet.

2. The method of claim 1, wherein the first aluminum alloy is selected from a group consisting of a 1xxx series aluminum alloy, a 2xxx series aluminum alloy, a 3xxx series aluminum alloy, a 4xxx series aluminum alloy, a 5xxx series aluminum alloy, a 6xxx series aluminum alloy, a 7xxx series aluminum alloy, or an 8xxx series aluminum alloy, and wherein the second aluminum alloy is selected from a group consisting of a 1xxx series aluminum alloy, a 2xxx series aluminum alloy, a 3xxx series aluminum alloy, a 4xxx series aluminum alloy, a 5xxx series aluminum alloy, a 6xxx series aluminum alloy, a 7xxx series aluminum alloy, or an 8xxx series aluminum alloy that is different from the first aluminum alloy.

3. The method of claim 1 or 2, wherein the first aluminum alloy is selected from the group consisting of a 6014 aluminum alloy, a 6111 aluminum alloy, and a 6451 aluminum alloy, and wherein the second aluminum alloy is a 4045 aluminum alloy.

4. The method of any one of claims 1-3, wherein the first aluminum alloy is about 80%-90% of a thickness of the fusion alloy and wherein the second aluminum alloy is about 10%-20% of the thickness of the fusion alloy.

5. A welded structure comprising a first metal sheet (102) and a second metal sheet (104) and a resistance spot weld formed by the method of any one of claims 1-4, wherein both the first metal sheet (102) and the second metal sheet (104) comprise an aluminum alloy, and being **characterised in that** the first metal sheet (102) is a fusion alloy comprising a core of a first aluminum alloy and at least one outer layer of a second aluminum alloy that is different from the first aluminum alloy and, wherein the second metal sheet (104) comprises a monolithic aluminum sheet.

**Patentansprüche**

1. Verfahren zum Widerstandspunktschweißen, umfassend:

Positionieren eines ersten Metallblechs (102) und eines zweiten Metallblechs (104) zwischen zwei Elektroden (110), wobei mindestens ein Teil des ersten Metallblechs einen Teil des zweiten Metallblechs zwischen den beiden Elektroden (110) überlappt, wobei das erste Metallblech (102) und das zweite Metallblech (104) eine Aluminiumlegierung umfassen, Zusammenklemmen der beiden Elektroden (110), so dass die Elektroden (110) mit gegenüberliegenden Oberflächen des ersten Metallblechs (102) und des zweiten Metallblechs (104) in Kontakt sind; und Anlegen eines Stroms an das erste Metallblech (102) und das zweite Metallblech (104) durch die beiden Elektroden (110), um eine Schweißnaht mit einer minimalen Schweißnahtgröße auszubilden, um das erste Metallblech mit dem zweiten Metallblech zu verbinden, und wobei der Strom innerhalb eines Schweißbereichs ist, wobei der Schweißbereich einen minimalen Strom, der zum Ausbilden der minimalen Schweißnahtgröße ausreicht, und einen maximalen Strom, bei dem ein Metallaustreiben und/oder eine Oberflächenrissbildung auftritt, umfasst,

**dadurch gekennzeichnet, dass** das erste Metallblech (102) eine Schmelzlegierung ist, die einen Kern aus einer ersten Aluminiumlegierung und mindestens eine äußere Schicht aus einer zweiten Aluminiumlegierung umfasst, die sich von der ersten Aluminiumlegierung unterscheidet, und wobei das zweite Metallblech (104) ein monolithisches Aluminiumblech umfasst.

2. Verfahren nach Anspruch 1, wobei die erste Aluminiumlegierung ausgewählt ist aus einer Gruppe bestehend aus einer Aluminiumlegierung der Serie 1xxx, einer Aluminiumlegierung der Serie 2xxx, einer Aluminiumlegierung der Serie 3xxx, einer Aluminiumlegierung der Serie 4xxx, einer Aluminiumlegierung der Serie 5xxx, einer Aluminiumlegierung der Serie 6xxx, einer Aluminiumlegierung der Serie 7xxx oder einer Aluminiumlegierung der Serie 8xxx, und wobei die zweite Aluminiumlegierung aus einer Gruppe ausgewählt ist, die aus einer Aluminiumlegierung der Serie 1xxx, einer Aluminiumlegierung der Serie 2xxx, einer Aluminiumlegierung der Serie 3xxx, einer Aluminiumlegierung der Serie 4xxx, einer Aluminiumlegierung der Serie 5xxx, einer Aluminiumlegierung der Serie 6xxx, einer Aluminiumlegierung der Serie 7xxx oder einer Aluminiumlegierung der Serie 8xxx besteht, die sich von der ersten Aluminiumlegierung unterscheidet.

3. Verfahren nach Anspruch 1 oder 2, wobei die erste Aluminiumlegierung aus der Gruppe ausgewählt ist, die aus einer 6014 Aluminiumlegierung, einer 6111 Aluminiumlegierung und einer 6451 Aluminiumlegierung besteht, und wobei die zweite Aluminiumlegierung eine 4045 Aluminiumlegierung ist.

4. Verfahren nach einem der Ansprüche 1 bis 3, wobei die erste Aluminiumlegierung etwa 80 % bis 90 % der Dicke der Schmelzlegierung ist und wobei die zweite Aluminiumlegierung etwa 10 % bis 20 % der Dicke der Schmelzlegierung ist.

5. Geschweißte Struktur, umfassend ein erstes Metallblech (102) und ein zweites Metallblech (104) und eine Widerstandspunktschweißung, die durch das Verfahren nach einem der Ansprüche 1 bis 4 gebildet ist, wobei sowohl das erste Metallblech (102) als auch das zweite Metallblech (104) eine Aluminiumlegierung umfassen und **dadurch gekennzeichnet ist, dass** das erste Metallblech (102) eine Schmelzlegierung ist, die einen Kern aus einer ersten Aluminiumlegierung und mindestens eine äußere Schicht aus einer zweiten Aluminiumlegierung umfasst, die sich von der ersten Aluminiumlegierung unterscheidet, und wobei das zweite Metallblech (104) ein monolithisches Aluminiumblech umfasst.

## Revendications

1. Procédé de soudage par points par résistance comprenant :

le positionnement d'une première plaque métallique (102) et d'une seconde plaque métallique (104) entre deux électrodes (110), dans lequel au moins une portion de la première plaque métallique chevauche une portion de la seconde plaque métallique entre les deux électrodes (110), dans lequel la première plaque métallique (102) et la seconde plaque métallique (104) comprennent un alliage d'aluminium, le serrage des deux électrodes (110) conjointement de sorte que les électrodes (110) viennent au contact de surfaces opposées de la première plaque métallique (102) et de la seconde plaque métallique (104) ; et l'application d'un courant à la première plaque métallique (102) et à la seconde plaque métallique (104) à travers les deux électrodes (110) pour former une soudure ayant une taille de soudure minimale pour joindre la première plaque métallique à la seconde plaque métallique, et dans lequel le courant est à l'intérieur d'une enveloppe de soudure, dans lequel l'enveloppe de soudure inclut un courant minimal suffisant pour former la taille de soudure minimale et un courant maximal auquel une expulsion de métal et/ou une fissuration de surface se produisent, **caractérisé en ce que** la première plaque métallique (102) est un alliage par fusion comprenant un noyau d'un premier alliage d'aluminium et au moins une couche extérieure d'un second alliage d'aluminium qui est différent du premier alliage d'aluminium, et dans lequel la seconde plaque métallique (104) comprend une plaque d'aluminium monolithique.

2. Procédé selon la revendication 1, dans lequel le premier alliage d'aluminium est sélectionné dans un groupe se composant d'un alliage d'aluminium de série 1xxx, d'un alliage d'aluminium de série 2xxx, d'un alliage d'aluminium de série 3xxx, d'un alliage d'aluminium de série 4xxx, d'un alliage d'aluminium de série 5xxx, d'un alliage d'aluminium de série 6xxx, d'un alliage d'aluminium de série 7xxx, et d'un alliage d'aluminium de série 8xxx, et dans lequel le second alliage d'aluminium est sélectionné dans un groupe se composant d'un alliage d'aluminium de série 1xxx, d'un alliage d'aluminium de série 2xxx, d'un alliage d'aluminium de série 3xxx, d'un alliage d'aluminium de série 4xxx, d'un alliage d'aluminium de série 5xxx, d'un alliage d'aluminium de série 6xxx, d'un alliage d'aluminium de série 7xxx, et d'un alliage d'aluminium de série 8xxx, qui est différent du premier alliage d'aluminium.

3. Procédé selon la revendication 1 ou 2, dans lequel le premier alliage d'aluminium est sélectionné dans le groupe se composant d'un alliage d'aluminium 6014, d'un alliage d'aluminium 6111, et d'un alliage d'aluminium 6451, et dans lequel le second alliage d'aluminium est un alliage d'aluminium 4045.

4. Procédé selon l'une quelconque des revendications 1 à 3, dans lequel le premier alliage d'aluminium est d'environ 80 % à 90 % d'une épaisseur de l'alliage par fusion et dans lequel le second alliage d'aluminium est d'environ 10 % à 20 % de l'épaisseur de l'alliage par fusion.

5. Structure soudée comprenant une première plaque métallique (102) et une seconde plaque métallique (104) et une soudure par point par résistance formée par le procédé selon l'une quelconque des revendications 1 à 4, dans laquelle à la fois la première plaque métallique (102) et la seconde plaque métallique (104) comprennent un alliage d'aluminium,

et étant **caractérisée en ce que**
la première plaque métallique (102) est un alliage par fusion comprenant un noyau d'un premier alliage d'aluminium et au moins une couche extérieure d'un second alliage d'aluminium qui est différent du premier alliage d'aluminium, et, dans laquelle la seconde plaque métallique (104) comprend une plaque d'aluminium monolithique.

FIG. 1A

Step 1  Step 2  Step 3  Step 4

FIG. 1B

EP 3 528 991 B1

Step 1

Step 2

Step 3

Step 4

FIG. 1C

FIG. 2A

FIG. 2B

FIG. 3A

FIG. 3B

FIG. 3C

FIG. 4B

FIG. 4A

FIG. 4C

Average = 1917 N, Stdev = 86 N

FIG. 5A

Average = 1936 N, Stdev = 93 N

FIG. 5B

FIG. 6

FIG. 7

FIG. 8

EP 3 528 991 B1

5 ms     17 ms     33 ms     67 ms     100 ms

902    902    902    902    902

5 ms     17 ms     33 ms     67 ms     100 ms

904    904    904    904    904

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013096669 A2
- US 20080102308 A1
- US 20150053655 A1
- JP H04160130 A
- JP H0810964 A